# EUROPEAN PATENT SPECIFICATION

(11) **EP 0 455 434 B1**
(45) Date of publication and mention of the grant of the patent: **20.03.1996**
(21) Application number: 91303811.3
(22) Date of filing: 26.04.1991
(51) Int. Cl.: H04N 5/21

(54) **Noise reducers**
Rauschverminderungsanordnungen
Réducteurs de bruit

(30) Priority: 28.04.1990 JP 114510/90; 28.06.1990 JP 168505/90
(43) Date of publication of application: 06.11.1991
(73) Proprietor: SONY CORPORATION, Tokyo 141 (JP)
(72) Inventor: Matsunaga, Osamu, c/o Patents Division, Shinagawa-ku Tokyo 141 (JP)
(74) Representative: Cotter, Ivan John

(56) References cited:
- GB-A- 2 099 657
- JP-A- 1 233 825

## Description

This invention relates to noise reducers, particularly, but not exclusively, for reducing noise included in a video signal of the MUSE system.

To transmit a high definition television signal (HDTV) through a transmission medium of a narrow band, there has been developed the MUSE (multiple sub-nyquist sampling encoding) transmission system in which the signal to be transmitted is sub-sampled so as to be compressed in signal bandwidth, and a still video image region and a moving video image region are subjected to different signal processing, so that deterioration in resolution of the video image when displayed becomes less visually noticeable.

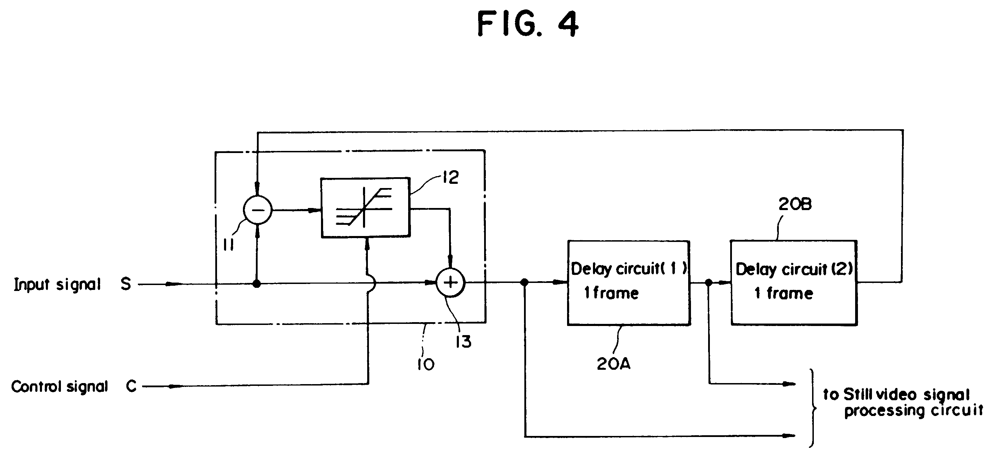

As a noise reducer for use in a receiving system of a MUSE system, for suppressing mixed noise in a video signal while being transmitted through a signal transmission line, there has been proposed a circuit as shown in Figure 4.

In the MUSE decoder of such a receiving system, there are provided a signal processing block 10 for suppressing noise in a received input signal S, and two one-frame delay circuits 20A and 20B.

The signal processing block 10 comprises a subtractor 11 for detecting a difference signal between a signal delayed by a two-frame period and an input signal, hereinafter referred to as "two-frame difference signal", a coefficient multiplier 12 for providing the output signal of the subtractor 11 with a predetermined characteristic, and an adder 13 for adding the output of the coefficient multiplier 12 to the original video signal, thereby achieving noise reduction.

In the MUSE system, one picture area of still video image is obtained by transmission of four fields and, hence, the two-frame difference signal can be considered as a noise signal component.

Since the output of the subtractor 11 thus includes the noise component, a noise reducer can be established by having this signal supplied, through the coefficient multiplier 12, to the adder 13, so that the noise component is added to the original signal.

The coefficient multiplier 12 is arranged such that its non-linear characteristic is changed by a noise level control signal C obtained by detecting the level variation component of a reference signal superimposed, for example, on the clamp level of 563H or 1125H of the received video signal, whereby the noise quantity to be cancelled is controlled to increase when the noise quantity of the transmitting system is greater.

The coefficient multiplier 12 is provided with a characteristic to suppress its output level when the two-frame difference signal is greater than a predetermined value, taking such difference signal for a motion video image region.

The above described noise reducer can vary its noise suppression according to whether the transmission system is good or bad, but when the S/N of the transmission system is good, for example, its suppression becomes lower. Hence, there has been a difficulty that it cannot exhibit a sufficient effect as a noise reducer against the noise originally included in the video signal. For example, it cannot suppress the noise included in a low quality video signal.

Moreover, a slightly moving portion is taken as a noise and the noise reducer operates on such portion. Hence, there has been a difficulty that a deterioration in the image quality occurs.

UK Patent Application Publication GB-A-2 099 657 discloses a noise reducer for processing a received video signal, the noise reducer comprising:
delay means for delaying a received video signal to produce a delayed video signal;
noise reduction means for reducing noise of the received video signal, the noise reduction means comprising subtraction means for subtracting the received video signal and the delayed video signal to produce a difference signal, variable gain means for imparting a variable gain to said difference signal, and addition means for adding the received video signal and the gained difference signal and for feeding the output signal thereof as an input signal to said delay means;
noise level detection means for detecting a noise level originally included in a still image region of the received video signal;
motion level detection means for detecting motion in the received video signal; and
gain control means for controlling the gain of said variable gain means in accordance with both said detected motion and said detected noise level.

According to the present invention there is provided a noise reducer as just set forth above, characterised in that:
said delay means is operative to produce a two-frame delayed video signal;
said noise level detection means is responsive to said difference signal to detect the noise level originally included in a still image region of the received video signal;
noise level control means is provided for controlling said detected noise level in accordance with a transmission system noise level to produce a controlled noise level; and
said gain control means is operative to control the gain of said variable gain means in accordance with both said detected motion and said controlled noise level.
Such a noise reducer enables the noise reduction effect to be controlled by image motion, by the noise level originally included in the video signal, and by the transmission system noise level, whereby a good noise suppression effect can be achieved.

An embodiment of the present invention provides a noise reducer arranged such that whether or not there is a noise in a still video image region is detected from a two-frame difference signal in accordance with a signal, which is obtained for example by making use of a motion detecting means provided in a MUSE decoder, indicating the presence or absence of motion, and further arranged such that the quantity of noise to be subtracted is calculated in accordance with the level of the above-described noise and the earlier described noise level signal of the transmission system.

An embodiment of noise reducer, for use, for example, in the receiving circuit system of a MUSE system used for transmitting a high definition television signal, comprises a noise reduction means including a means for detecting a two-frame difference signal and a means for subtracting the two-frame difference signal and the received signal and arranged such that the noise reduction means is controlled both by the noise level of the transmission system and by the motion level of the video image. Accordingly, the noise reducer is able to suppress even originally included noise in the transmitted video signal and therefore achieve an enhanced noise suppressing effect.

The invention will now be described by way of example with reference to the accompanying drawings, throughout which like parts are referred to by like references, and in which:
Figure 1 is a block diagram showing an embodiment of the present invention;
Figure 2 is a graph showing relationships between a noise level and a noise determination output;
Figure 3(a) and Figure 3(b) are graphs showing variations in the noise quantity subtracted by a noise reducer; and
Figure 4 is a block diagram showing a previously proposed noise reducer.

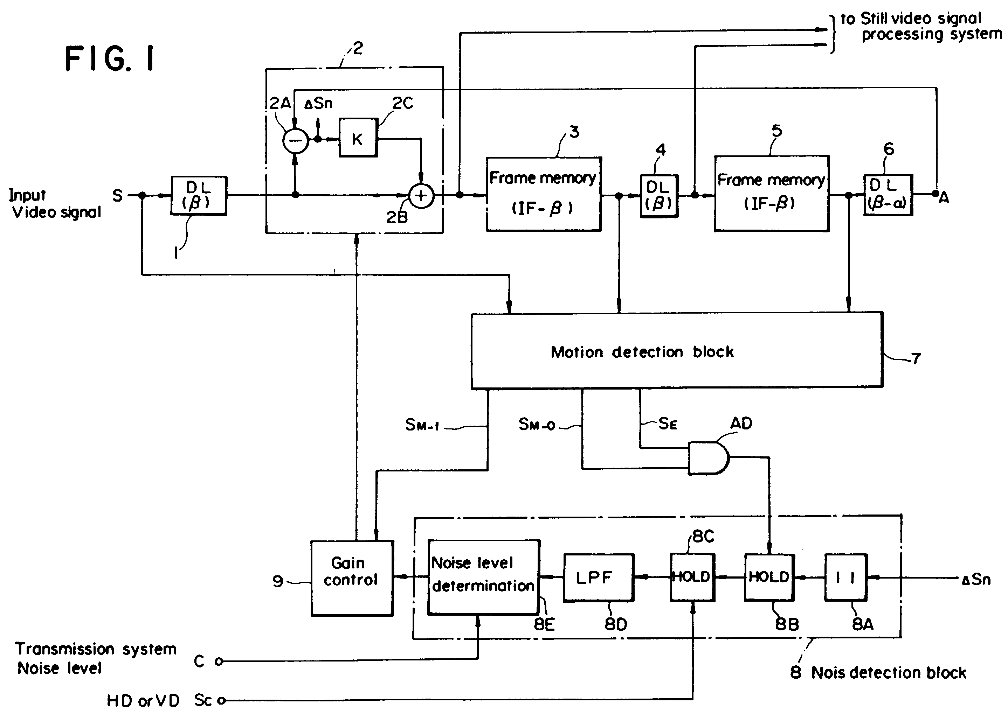

The embodiment of Figure 1 comprises a delay circuit 1 (delay time: β) for time matching, and a signal processing block 2 including, for example, a subtractor 2A, an adder 2B and a coefficient multiplier 2C for subtracting a noise signal component detected by making use of a two-frame difference signal from the received video signal.

Frame delay circuits 3 and 5 each obtain a one-frame delayed signal (a (1F - β)-frame delay circuit, to be exact). A delay circuit 4 for time matching (delay time: β), and a delay circuit 6 provided with the processing time α required in the signal processing block 2 (delay time: β - α) are also provided.

A motion detection block 7 is supplied with the one-frame-delayed video signal and the two-frame-delayed video signal for detecting motion in the video image.

A noise detection block 8 includes an absolute value circuit 8A, a first holding circuit 8B holding its output in response to a signal generated when a portion with no motion and being a non-edge of the video signal is detected, a second holding circuit 8C holding its output at a synchronization signal portion of the received video signal, a smoothing filter 8D, and a noise level determination circuit 8E.

The noise level determination circuit 8E is formed of a non-linear amplifier whose output signal varies in response to the above-described noise level signal C of the transmission system or the like.

A gain control circuit 9 generates signals controlling the coefficient of the coefficient multiplier 2C of the signal processing block 2. The subtracted quantity of the noise signal component is controlled by this gain control circuit 9 as described later.

The operation will now be described. The video signal S received by the decoder of the MUSE system is supplied to the frame delay circuits 3 and 5 through the delay circuit 1 and the signal processing block 2, and a two-frame-delayed signal is supplied to a point A. The signal (Sd) at the point A is supplied to the subtractor 2A of the signal processing block 2. A difference signal between this signal and the input video signal is obtained in the signal processing block 2 and a two-frame-difference signal Δ Sₙ (=Sd-S) can thereby be obtained. The two-frame-difference signal Δ Sₙ indicates, when the video signal is for a still video image region, a noise component superimposed on the video image, and therefore, in the case of the still video image region, the noise component is added to the input video signal in the adder 2B and, thereby, a still video image signal with the noise suppressed can be obtained. Specifically, the output signal K(Sd-S) from the coefficient multiplier 2C is added (with adder 2B) to the input signal S to produce an output signal S+K(Sd-S), that is (I-K)S+KSd.

The noise reducer is arranged to detect a motion video image region of the input video signal by means of the motion detection block 7 which detects a motion in the video signal.

More specifically, a signal S_{M-0} indicative of the quantity of motion being zero and a signal S_{E} indicative of the video image being a non-edge portion detected by the motion detection block 7 are supplied to an AND circuit AD, and when both the signals are at the H level, a signal obtained by turning the two-frame-difference signal ΔSₙ detected in the signal processing block 2 into its absolute value in the absolute value circuit 8A is held by the first holding circuit 8B, and supplied to the next second holding circuit 8C.

The second holding circuit 8C is also supplied with a signal S_{c} indicating the portion of a synchronization signal of the video image and controlled by the signal S_{c} to hold its output. The output is then supplied to the smoothing filter 8D, wherein the average level of the noise component ΔSₙ is detected, and supplied to the noise level determination circuit 8E.

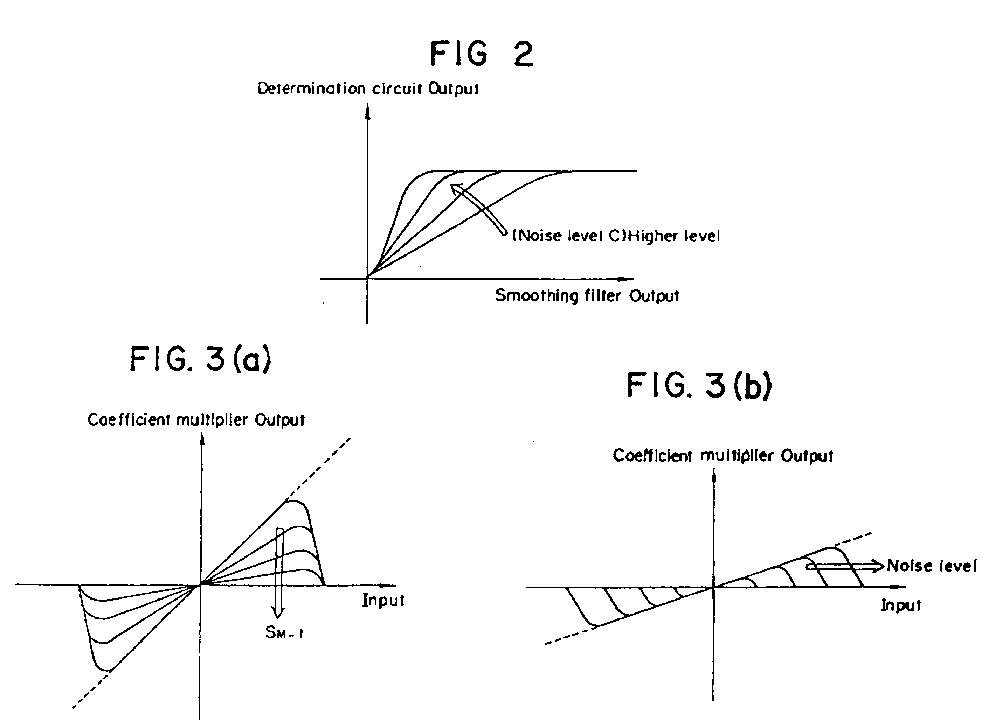

The noise level determination circuit 8E comprises a non-linear amplifier, the output of which varies in accordance with the noise level C of the transmitting system, for example, as shown in Figure 2, and hence it is controlled to increase its output signal when the noise of the transmitting system is greater. In accordance with the magnitude of this output signal, the output of the gain control circuit 9 is varied, and, thereby, the coefficient of the coefficient multiplier 2C within the signal processing block 2 is controlled to establish the quantity to be cancelled by the noise component.

The gain control circuit 9 is also controlled by a motion amount output from the motion detection block 7.

In this case, the control is executed, for example, such that the saturation point of the coefficient multiplier 2C is lowered when the amount of motion S_{M-1} is greater as shown in Figure 3(a), while the saturation level is raised when the noise level is higher as shown in Figure 3(b).

The above described characteristic of cancellation by the noise component is given only by way of example, and other cancellation characteristics may be provided. Generally speaking, it is preferred that the control is such that the smaller the amount of motion and the higher the noise level is, the larger proportion of the noise component is subtracted.

While it is usual in a noise reducer that the cancelled amount of the noise component is controlled only by the noise level of the transmitting system, the present noise reducer is such that its noise reducing effect is controlled also by the motion in the video image and the noise level originally included in the video signal. Accordingly, an advantage can be obtained of good noise suppressing effect even on a video signal having a deteriorated S/N ratio for example because it is obtained by dubbing or on-the-spot picture taking.

## Claims

1. A noise reducer for processing a received video signal, the noise reducer comprising:
delay means (3, 5) for delaying a received video signal to produce a delayed video signal;
noise reduction means (2) for reducing noise of the received video signal, the noise reduction means (2) comprising subtraction means (2A) for subtracting the received video signal and the delayed video signal to produce a difference signal (ΔSn), variable gain means (2C) for imparting a variable gain to said difference signal, and addition means (2B) for adding the received video signal and the gained difference signal and for feeding the output signal thereof as an input signal to said delay means ;
noise level detection means (AD, 8A, 8B, 8C, 8D) for detecting a noise level originally included in a still image region of the received video signal;
motion level detection means (7) for detecting motion in the received video signal; and
gain control means (9) for controlling the gain of said variable gain means (2C) in accordance with both said detected motion and said detected noise level;
characterised in that:
said delay means (3, 5) is operative to produce a two-frame delayed video signal;
said noise level detection means (AD, 8A, 8B, 8C, 8D) is responsive to said difference signal (ΔSn) to detect the noise level originally included in a still image region of the received video signal;
noise level control means (8E) is provided for controlling said detected noise level in accordance with the transmission system noise level (C) to produce a controlled noise level; and
said gain control means (9) is operative to control the gain of said variable gain means (2C) in accordance with both said detected motion and said controlled noise level.

2. A noise reducer according to claim 1, wherein the delay means (3, 4) is also operative to provide a one-frame delayed video signal and wherein the motion level detection means (7) is arranged to be supplied with the one-frame delayed video signal and the two-frame delayed video signal.

3. A noise reducer according to claim 1 or claim 2, which is capable of processing said received video signal which is a television signal of the MUSE system.

4. A noise reducer according to claim 1, claim 2 or claim 3, including means for detecting a level variation of a reference signal superimposed on the received video signal to produce the transmission system noise level (C).

5. A noise reducer according to any one of the preceding claims, wherein the noise level control means (8E) is a non-linear amplifier which is operative to amplify said detected noise level and whose output signal is arranged to be controlled in accordance with the transmission system noise level (C).

6. A noise reducer according to claim 5, wherein the output signal of the non-linear amplifier (8E) is arranged to be increased when the transmission system noise level (C) increases.

## Patentansprüche

1. Rauschreduzieranordnung zur Verarbeitung eines Videoempfangssignals, wobei die Rauschreduzieranordnung aufweist:
eine Verzögerungseinrichtung (3, 5) zur Verzögerung eines Videoempfangssignals, um ein verzögertes Videosignal zu erzeugen;
eine Rauschreduziereinrichtung (2) zur Reduzierung eines Rauschens des Videoempfangssignals, wobei die Rauschreduziereinrichtung (2) eine Subtrahiereinrichtung (2A) aufweist, um das Videoempfangssignal vom verzögerten Videosignal zu subtrahieren, um ein Differenzsignal (ΔSₙ) zu erzeugen, eine abstimmbare Verstärkungseinrichtung (2C), um dem Differenzsignal eine abstimmbare Verstärkung zukommen zu lassen, und eine Additionseinrichtung (2B) zur Addition des Videoempfangssignals mit dem verstärkten Differenzsignal und zum Zuführen dieses Ausgangssignals als Eingangssignal zur Verzögerungseinrichtung;
eine Rauschpegelermittlungseinrichtung (AD, 8A, 8B, 8C, 8D) zur Ermittlung eines Rauschpegels, der ursprünglich in einem Einzelbildbereich des Videoempfangssignals enthalten ist;
eine Bewegungspegelermittlungseinrichtung (7) zur Ermittlung der Bewegung im Videoempfangssignal; und
eine Verstärkungssteuereinrichtung (9) zur Steuerung der Verstärkung der abstimmbaren Verstärkungseinrichtung (2C) in Abhängigkeit von sowohl der ermittelten Bewegung als auch des ermittelten Rauschpegels;
gekennzeichnet dadurch, daß:
die Verzögerungseinrichtung (3, 5) ein zweirahmenverzögertes Videosignal erzeugen kann;
die Rauschpegelermittlungseinrichtung (AD, 8A, 8B, 8C, 8D) auf das Differenzsignal (ΔSₙ) reagiert, um den Rauschpegel zu ermitteln, der ursprünglich in einem Einzelbildbereich des Videoempfangssignals enthalten ist;
eine Rauschpegelsteuereinrichtung (8E) vorgesehen ist, um den ermittelten Rauschpegel in Abhängigkeit vom Übertragungssystem-Rauschpegel (C) zu steuern, um einen gesteuerten Rauschpegel zu erzeugen; und
die Verstärkungssteuereinrichtung (9) die Verstärkung der abstimmbaren Verstärkungseinrichtung (2C) in Abhängigkeit von sowohl der ermittelten Bewegung als auch des gesteuerten Rauschpegels steuern kann.

2. Rauschreduzieranordnung nach Anspruch 1, wobei die Verzögerungseinrichtung (3, 5) ein einrahmenverzögertes Videosignal bereitstellen kann, und wobei die Bewegungspegelermittlungseinrichtung (7) eingerichtet ist, daß sie mit dem einrahmenverzögerten Videosignal und dem zweirahmenverzögerten Videosignal belieferbar ist.

3. Rauschreduzieranordnung nach Anspruch 1 oder 2, die in der Lage ist, das Videoempfangssignal zu verarbeiten, welches ein Fernsehsignal des MUSE-Systems ist.

4. Rauschreduzieranordnung nach Anspruch 1, 2 oder 3, die Mittel zur Ermittlung einer Pegelveränderung eines Referenzsignals aufweist, das dem Videoempfangssignal überlagert ist, um den Übertragungssystem-Rauschpegel (C) zu erzeugen.

5. Rauschreduzieranordnung nach einem der vorhergehenden Ansprüche, wobei die Rauschpegelsteuereinrichtung (8E) ein nichtlinearer Verstärker ist, der den ermittelten Rauschpegel verstärken kann und dessen Ausgangssignal eingerichtet ist, daß es in Abhängigkeit vom Übertragungssystem-Rauschpegel (C) gesteuert werden kann.

6. Rauschreduzieranordnung nach Anspruch 5, wobei das Ausgangssignal des nichtlinearen Verstärkers (8E) vergrößert wird, wenn der Übertragungssystem-Rauschpegel (C) ansteigt.

## Revendications

1. Réducteur de bruit pour traiter un signal vidéo reçu, le réducteur de bruit comprenant:
- des moyens de retard (3, 5) pour retarder un signal vidéo reçu pour produire un signal vidéo retardé;
- des moyens de réduction de bruit (2) pour réduire le bruit du signal vidéo reçu, les moyens de réduction de bruit (2) comprenant des moyens de soustraction (2A) pour soustraire le signal vidéo reçu et le signal vidéo retardé pour produire un signal différence (▲Sₙ), des moyens de gain variable (2C) pour communiquer un gain variable audit signal différence, et des moyens d'addition 2B pour additionner le signal vidéo reçu et le signal différence obtenu, et pour fournir le signal de sortie de celui-ci comme signal d'entrée auxdits moyens de retard;
- des moyens de détection de niveau de bruit (AD, 8A, 8B, 8C, 8D) pour détecter un niveau de bruit inclus initialement dans une région d'image fixe du signal vidéo reçu;
- des moyens de détection de niveau de mouvement (7) pour détecter le mouvement dans le signal vidéo reçu; et
- des moyens de commande de gain (9) pour commander le gain desdits moyens de gain variable (2C) selon tant ledit mouvement détecté que ledit niveau de bruit détecté,
caractérisé en ce que:
- lesdits moyens de retard (3, 5) fonctionnent pour produire un signal vidéo retardé de deux images individuelles;
- lesdits moyens de détection de niveau de bruit (AD, 8A, 8B, 8C, 8D) sont sensibles audit signal différence (▲Sₙ) pour détecter le niveau de bruit inclus initialement dans une région d'image fixe du signal vidéo reçu;
- des moyens de commande de niveau de bruit (8E) sont prévus pour commander ledit niveau de bruit détecté selon le niveau de bruit (C) du système de transmission pour produire un niveau de bruit commandé; et
- lesdits moyens de commande de gain (9) fonctionnent pour commander le gain desdits moyens de gain variable (2C) selon tant ledit mouvement détecté que ledit niveau de bruit commandé.

2. Réducteur de bruit selon la revendication 1, dans lequel les moyens de retard (3, 4) fonctionnent en outre pour fournir un signal vidéo retardé d'une image individuelle, et dans lequel les moyens de détection de niveau de mouvement (7) sont agencés pour recevoir le signal vidéo retardé d'une image individuelle et le signal vidéo retardé de deux images individuelles.

3. Réducteur de bruit selon la revendication 1 ou la revendication 2, qui est apte à traiter ledit signal vidéo reçu qui est un signal de télévision du procédé MUSE.

4. Réducteur de bruit selon la revendication 1, 2 ou 3, comportant des moyens pour détecter une variation de niveau d'un signal de référence superposé au signal vidéo reçu pour produire le niveau de bruit (C) du système de transmission .

5. Réducteur de bruit selon l'une quelconque des revendications précédentes, dans lequel les moyens de commande de niveau de bruit (8E) sont un amplificateur non linéaire qui fonctionne pour amplifier ledit niveau de bruit détecté et dont le signal de sortie est prévu pour être commandé selon le niveau de bruit (C) du système de transmission.

6. Réducteur de bruit selon la revendication 5, dans lequel le signal de sortie de l'amplificateur non linéaire (8E) est prévu pour être augmenté lorsque le niveau de bruit (C) du système de transmission augmente.
